# FASCICULE DE BREVET EUROPEEN

(11) **EP 0 836 701 B1**
(45) Date de publication et mention de la délivrance du brevet: **03.02.1999**
(21) Numéro de dépôt: 96924937.4
(22) Date de dépôt: 04.07.1996
(51) Int. Cl.: G01F 15/00

(54) **ORGANE DE COUPURE ANTIFRAUDE POUR COMPTEUR DE GAZ ET COMPTEUR DE GAZ EQUIPE D'UN TEL ORGANE DE COUPURE**
BETRUGSVERHINDERNDES SCHALTORGAN FÜR GASZÄHLER UND GASZÄHLER DAMIT
TAMPER-PROOF CUT-OFF MEMBER FOR A GAS METER, AND GAS METER PROVIDED THEREWITH

(30) Priorité: 05.07.1995 FR 9508112
(43) Date de publication de la demande: 22.04.1998
(73) Titulaire: SCHLUMBERGER INDUSTRIES S.A., 92120 Montrouge (FR)
(72) Inventeur: HEC, Michel, F-78420 Carrières-sur-Seine (FR); CHAMPOUGNY, Jean-Luc, F-51140 Romain (FR)
(86) Numéro de dépôt international: FR9601046
(87) Numéro de publication internationale: WO9702471

(56) Documents cités:
- EP-A- 0 117 208
- EP-A- 0 431 222

## Description

L'invention est relative à un organe de coupure d'un flux de gaz pour compteur de gaz comprenant un clapet mobile par rapport à un siège de clapet dans une direction longitudinale, ledit clapet étant relié à un axe dit de clapet aligné suivant cette direction longitudinale ainsi qu'à un compteur de gaz comprenant une unité de mesure et équipé, en amont de celle-ci dans le sens de circulation d'un flux de gaz entrant dans ledit compteur, d'un organe de coupure dudit flux de gaz.

Dans les compteurs de gaz, notamment dans les compteurs de gaz dits domestiques, il est connu d'installer un organe de coupure du flux de gaz en amont de l'unité de mesure du compteur pour assurer la sécurité.
Par exemple, en cas de fuite de gaz, les compteurs de gaz détectent un débit de fuite ce qui déclenche automatiquement la coupure du flux de gaz par l'organe de coupure.
En outre, un tel organe de coupure est également utilisé lorsque le compteur de gaz est équipé d'un système à prépaiement afin de couper le flux de gaz quand le crédit de l'utilisateur est épuisé
On connaît par exemple un compteur de gaz dans lequel l'organe de coupure comprend un clapet mobile par rapport à un siège de clapet dans une direction longitudinale, ledit clapet étant relié à un axe dit de clapet aligné suivant cette direction longitudinale.
L'axe de clapet de cet organe de coupure est actionné par un noyau qui se déplace à l'intérieur d'un champ magnétique créé par des aimants sous l'action d'une impulsion donnée par une bobine.
Dans les compteurs de gaz à prépaiement, lorsque le crédit de l'utilisateur est épuisé, la fermeture automatique de l'organe de coupure est commandée et le clapet vient en contact avec le siège de clapet afin de couper le flux de gaz.
Néanmoins, avec un tel organe de coupure, l'utilisateur peut en exerçant un effort mécanique sur le clapet écarter celui-ci de son siège et donc continuer à consommer du gaz sans payer.
L'utilisateur peut également créer à l'extérieur du compteur de gaz un champ magnétique extérieur suffisamment puissant pour annuler le champ magnétique créé par les aimants de l'organe de coupure, et ainsi actionner manuellement le clapet.
La présente invention propose donc un organe de coupure d'un flux de gaz pour compteur de gaz qui soit simple de conception et permette d'éviter au moins un des types de fraude mentionnés ci-dessus.

La présente invention a ainsi pour objet un organe de coupure d'un flux de gaz pour compteur de gaz comprenant un clapet mobile par rapport à un siège de clapet dans une direction longitudinale, ledit clapet étant relié à un axe dit de clapet aligné suivant cette direction longitudinale, caractérisé en ce qu'au moins une partie dudit axe de clapet est filetée et coopère avec une pièce entourant ladite partie de l'axe et formant écrou, ledit axe de clapet ayant ainsi un mouvement hélicoïdal.
Lorsque l'organe de coupure est en position fermée, c'est-à-dire lorsque le clapet est en contact avec le siège de clapet ( par exemple, si le compteur de gaz est un appareil à prépaiement et si le crédit de l'utilisateur est épuisé) le fait que l'axe de clapet se visse dans la pièce formant écrou empêche d'écarter le clapet de son siège sous l'action d'une poussée mécanique sur ledit clapet suivant une direction longitudinale ou inclinée par rapport à cette direction .
Par ailleurs, étant donné que le clapet est verrouillé mécaniquement, le risque de fraude magnétique est considérablement réduit.
Il convient de mentionner que cette invention permet également à l'organe de coupure de résister aux surpressions régnant dans le réseau de gaz et qui pourraient ouvrir un organe de coupure de l'art antérieur tel que celui cité ci-dessus.
En outre, lorsque le clapet est monté libre en rotation sur l'axe de clapet, il est alors même impossible d'écarter le clapet de son siège en essayant de faire tourner ledit clapet autour de son axe.
Selon une caractéristique de l'invention, l'axe de clapet est entraîné en rotation au moyen d'un moteur.
Le moteur peut être placé à une extrémité de l'axe de clapet qui est opposée à l'extrémité dudit axe où se trouve le clapet .

Le moteur peut également transmettre le mouvement de rotation à l'axe de clapet par l'intermédiaire d'un dispositif d'entraînement mécanique.

Selon un type de dispositif d'entraînement mécanique, l'axe de clapet porte une couronne dentée emmanchée sur ledit axe et coopère avec un pignon entraîné en rotation par le moteur autour d'un second axe parallèle à l'axe de clapet et qui est relié audit moteur .

Le pignon a une dimension dans une direction parallèle à l'axe de clapet qui correspond au déplacement axial du clapet.
Toutefois, la couronne dentée peut avoir une dimension dans une direction parallèle à l'axe de clapet qui correspond au déplacement axial du clapet.

La couronne dentée est par exemple disposée entre le clapet et la pièce formant écrou.
La couronne dentée peut également être disposée derrière la pièce formant écrou, près de l'extrémité de l'axe de clapet qui est opposée à celle où se trouve le clapet.

Le moteur pas à pas est particulièrement avantageux dans un tel organe de coupure lorsque l'on désire que le clapet soit ajusté à une position précise, permettant ainsi de laisser passer un flux de gaz avec un débit donné.
Ce positionnement précis du clapet est par exemple nécessaire afin de limiter la consommation de gaz de l'utilisateur et ceci peut être imposé par la société distributrice de gaz.
Aussi, dans un tel cas, l'invention est particulièrement efficace puisque l'utilisateur ne peut agir mécaniquement ni même magnétiquement sur le clapet pour l'écarter davantage de son siège.

Avantageusement, lorsque l'on souhaite fermer rapidement l'organe de coupure quand un feu se déclare en amont dudit organe de coupure, la pièce formant écrou peut être soumise à l'action d'un organe élastique tendant à rapprocher ladite pièce et donc le clapet du siège de clapet, et est retenue dans sa position au moyen d'un élément dit fusible réalisé dans une matière fondant sous l'action de la chaleur.
Sous l'action d'une forte chaleur l'élément dit fusible se met à fondre et ne peut alors plus compenser l'effort exercé par l'organe élastique qui propulse la pièce formant écrou vers le siège de clapet, et donc force le clapet à entrer en contact avec ledit siège de clapet pour assurer l'étanchéité au gaz et empêcher la propagation du feu vers l'aval.
La pièce formant écrou est par exemple logée dans un orifice pratiqué dans une embase et comprend un épaulement, l'organe élastique étant comprimé entre ladite embase et ledit épaulement de manière à exercer sur ladite pièce un effort qui tend à la rapprocher du siège de clapet.

La pièce formant écrou traverse par exemple l'orifice et fait saillie hors de l'embase du coté opposé où se trouve l'organe élastique, l'élément dit fusible étant maintenu en appui contre ladite embase et exerçant sur ladite pièce un effort qui tend à l'éloigner du siège de clapet.

Pour améliorer l'efficacité de fermeture du clapet en cas de feu, l'embase est réalisée dans un matériau conducteur thermique et fait partie d'un châssis réalisé dans le même matériau et qui relie ladite embase au siège de clapet.
Ceci permet de transmettre rapidement la chaleur par conduction jusqu'à l'élément fusible qui pourra alors libérer plus tôt la pièce formant écrou.

La présente invention a également pour objet un compteur de gaz comprenant une unité de mesure et équipé, en amont de celle-ci dans le sens de circulation d'un flux de gaz entrant dans ledit compteur, d'un organe de coupure dudit flux de gaz, ledit organe de coupure comprenant un clapet mobile par rapport à un siège de clapet dans une direction longitudinale, ledit clapet étant relié à un axe dit de clapet aligné suivant cette direction longitudinale, caractérisé en ce qu'au moins une partie dudit axe de clapet est filetée et coopère avec une pièce entourant ladite partie de l'axe et formant écrou, ledit axe de clapet ayant ainsi un mouvement hélicoïdal.

L'organe de coupure peut être disposé à l'intérieur dudit compteur.

L'utilisation d'un moteur pas à pas permet en outre de disposer ce dernier à l'intérieur du compteur de gaz et ainsi d'avoir un ensemble plus compact que si le moteur était disposé à l'extérieur dudit compteur, ce qui n'est pas possible avec d'autres types de moteurs tels que par exemple les moteurs à courant continu qui peuvent générer des étincelles au cours de leur fonctionnement.
Cette caractéristique est particulièrement intéressante étant donné que les compteurs de gaz sont assez souvent installés dans des locaux exigus où un compteur de gaz d' encombrement réduit est préférable à un compteur de gaz qui comporte des éléments (moteur) extérieurs audit compteur.
En outre, lorsque le moteur pas à pas est disposé à l'intérieur du compteur de gaz, celà réduit les risques de fraude.

D'autres caractéristiques et avantages apparaîtront au cours de la description qui va suivre donnée à titre d'exemple non limitatif et faite en référence aux dessins annexés sur lesquels :
- la figure 1 est une vue simplifiée d'un compteur de gaz équipé d'un organe de coupure selon l'invention,
- la figure 2 est une vue schématique en coupe d'un mode réalisation de l'organe de coupure selon l'invention,
- la figure 3 est une vue schématique en coupe d'un autre mode de réalisation de l'organe de coupure selon l'invention,
- la figure 4 est une vue schématique en coupe d'une variante de réalisation de l'organe élastique représenté à la figure 3 incorporé dans l'organe de coupure,
- la figure 5 est une vue schématique en coupe d'une variante de réalisation de l'organe élastique représenté à la figure 4.

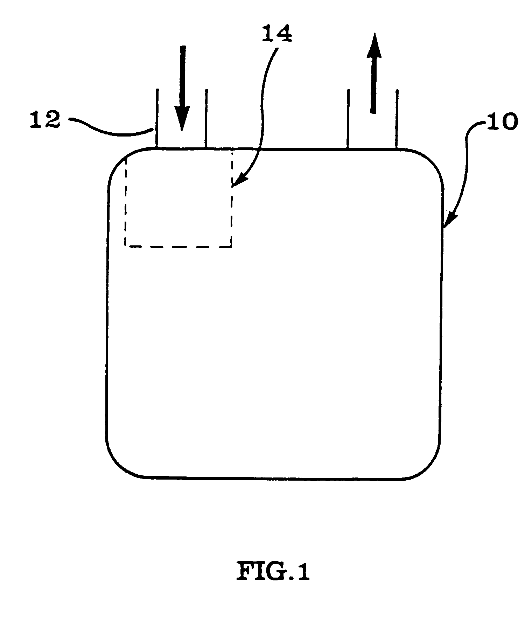

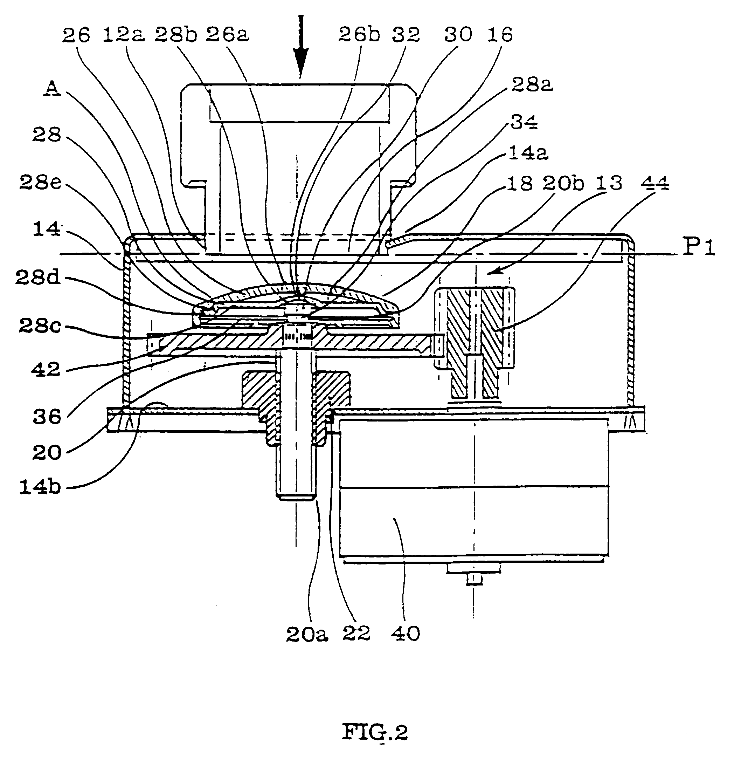

Comme représenté sur la figure 1 et désigné par la référence générale notée 10, un compteur de gaz dont on a indiqué le raccord d'amenée de gaz 12 est équipé d'un organe de coupure 14 qui est disposé à l'intérieur dudit compteur de gaz .
Ainsi que représenté sur la figure 2, l'organe de coupure 14 est disposé à l'intérieur d'un châssis métallique 16 qui est solidaire par sa partie supérieure 16a du raccord d'amenée de gaz 12.
Le raccord 12 forme par son extrémité inférieure en contact avec la partie supérieure 16a du châssis 16 un siège de clapet 12a qui définit une ouverture 18 de section de passage circulaire pour le passage du flux de gaz.
L'amenée de gaz se fait dans le sens indiqué par la flèche sur les figures 1 et 2. Lorsque le flux de gaz débouche hors du raccord d'amenée de gaz 12 à l'intérieur du châssis 16, ledit flux de gaz peut sortir dudit châssis par des ouvertures (non visibles sur la figure) disposées dans un plan parallèle à celui de la figure.
Le clapet 20 de l'organe de coupure 14 est monté sur un axe 22 dit axe de clapet, perpendiculaire à un plan P1 qui contient l'ouverture 18 définie par le siège de clapet.

L'axe de clapet 22 est fileté et est monté dans une pièce 24 formant écrou et qui est fixée dans la partie inférieure 16b du châssis 16, appelée embase, par exemple par sertissage.
Un moteur 26 qui peut par exemple être avantageursement du type pas à pas est placé à une des extrémités 22a de l'axe du clapet 22 qui est la plus éloignée du clapet 20.
Le moteur 26 entraîne ainsi en rotation l'axe du clapet 22 qui a un mouvement hélicoïdal et permet la montée et la descente du clapet 20 et donc la fermeture et l'ouverture de l'organe de coupure.
Le clapet 20 comprend une membrane 28 en appui sur une pièce métallique 30 formant support de membrane.
La membrane 28 possède une surface principale 28a de forme convexe tournée en direction de l'ouverture 18 et dont une partie vient en contact avec le siège de clapet 12a au droit d'une zone dite de contact A lorsque l'organe de coupure est en position fermée.
Dans cette position, la majeure partie de la surface principale 28a de la membrane 28 est située en face de l'ouverture 18 et vient donc obturer celle-ci.
Tel que représenté sur la figure 2, la pièce 30 formant support de membrane possède une surface continue étanche 30a disposée en vis-à-vis de la partie concave de la membrane 28.
La pièce 30 formant support de membrane s'étend dans une direction contenue dans un plan parallèle au plan P1 sur une dimension au moins égale au diamètre externe du siège de clapet 12a de manière à ce que la surface continue 30a soit située au droit de la zone de contact A et de l'ouverture 18.

La pièce 30 formant support de membrane et qui a par exemple la forme générale d'un disque repose en équilibre sur un pivot 32 solidaire de l'axe de clapet 22 et est centrée sur ce pivot.
Comme représenté sur la figure 2, le pivot 32 possède un embout 34 à portée sphérique qui permet d'obtenir un bon contact avec la pièce 30 et lui assure une liaison de type rotule. Une telle liaison permet de compenser les défauts de perpendicularité entre l'axe du clapet 22 et le siège de clapet 12a et donc concourt à assurer une meilleure étanchéité.
La pièce 30 formant support de membrane possède en son centre, face au pivot 32, une cavité 30b formée par exemple par emboutissage et dont la concavité est tournée vers ledit pivot.
L'embout sphérique 34 du pivot vient ainsi se loger dans la concavité 30b de la pièce 30.
La pièce 30 formant support de membrane possède une partie centrale 30c et une partie périphérique 30d toutes deux sensiblement planes et qui se rejoignent par une partie médiane 30e placée au droit de la zone de contact A. La partie médiane 30e a une forme tronconique (le sommet du cône étant situé vers le haut de la figure) lui permettant de bien s'adapter sur le siège de clapet 12a et ainsi d'améliorer l'étanchéité par rapport à une pièce formant support de membrane dont la surface continue aurait une forme sensiblement plane.
L'axe du clapet 22 comporte à son extrémité 22b une contre-dépouille 36 disposée sous le pivot 32.
Un anneau de maintien 38 est emmanché autour de la contre-dépouille 36 en laissant un jeu mécanique entre ledit anneau et celle-ci pour permettre à la liaison de type rotule d'assurer sa fonction.
La contre-dépouille 36 a un diamètre inférieur au diamètre dudit pivot afin d'empêcher un éventuel déplacement axial de l'anneau de maintien.
La pièce 30 formant support de membrane est en contact par une de ses faces qui est tournée vers le haut avec la membrane 28a au droit de la partie périphérique 30d, de la partie médiane 30e, de la périphérie de la partie centrale 30c ainsi qu'au droit de cavité 30b.
En effet, la membrane 28 possède-en vis-à-vis de la partie convexe de la cavité 30b un bossage 28b qui s'appuie sur la dite partie convexe.

La pièce 30 formant support de membrane est en contact par sa face opposée qui est tournée vers le bas avec l'anneau de maintien 38 ce qui assure à la dite pièce un bon contact avec la membrane 28.
La pièce 30 formant support de membrane et l'anneau de maintien constituent un empilage et la membrane 28 forme une sorte de capuchon qui recouvre la pièce 30 et vient enserrer ledit empilage en recouvrant une partie périphérique de la face de l'anneau qui est tournée vers le bas.
L'anneau de maintien 38 sert à lier le clapet avec l'axe du clapet 22.

Dans l'exposé qui suit on conservera les références des éléments qui n'ont pas été modifiés.

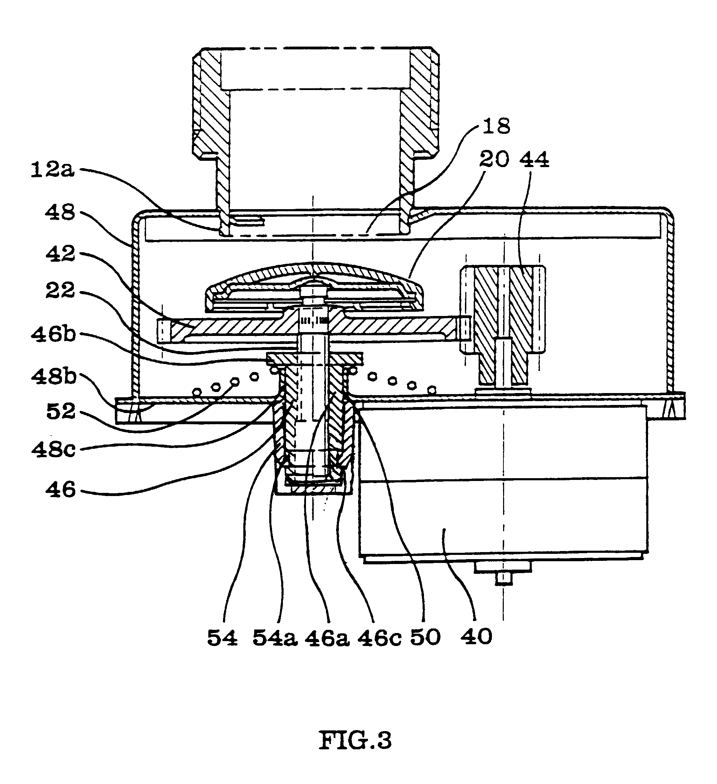

La figure 3 représente un autre mode de réalisation dans lequel un moteur pas à pas 40 transmet un mouvement de rotation à l'axe de clapet 22 par l'intermédiaire d'un dispositif d'entraînement mécanique. Ce dispositif est par exemple constitué d'une couronne dentée 42 emmanchée sur l'axe de clapet 22 et qui coopère avec un pignon d'entraînement 44 qui est relié au moteur 40, ledit moteur entraînant en rotation ledit pignon 44 autour d'un second axe parallèle à l'axe de clapet 22.
Le pignon d'entraînement 44 représenté sur la figure 3 a une dimension dans une direction parallèle à l'axe de clapet, appelée hauteur, qui correspond au déplacement axial du clapet et la couronne 42 a une hauteur plus faible pour des raisons d'encombrement.
Toutefois, dans les compteurs de gaz où l'on dispose d'une place suffisante, il est possible que le pignon et la couronne dentée aient sensiblement la même hauteur ou bien que seule la couronne dentée soit d'une hauteur qui corresponde au déplacement axial du clapet.
Le pignon 44 a par exemple treize dents et la couronne 42 a par exemple cinquante cinq dents.
Le pignon et la couronne portent tous deux une denture droite mais celle-ci pourrait également être hélicoïdale.
Sur cette figure ,la couronne dentée 42 est disposée entre le clapet 20 et la pièce formant écrou 46 , assurant ainsi un encombrement minimal. Cependant, il est possible de disposer la couronne dentée 42 sous la pièce formant écrou 46, près de l'extrémité de l'axe de clapet qui est opposée à celle où se trouve le clapet 20.

Comme représenté sur la figure 3, la pièce formant écrou 46 est constituée d'un manchon cylindrique 46a pourvu à son extrémité supérieure d'un épaulement 46b.
Le châssis métallique 48 comprend une embase 48b dans laquelle est pratiqué un orifice 50 qui reçoit le manchon cylindrique 46a de la pièce formant écrou. Un rebord annulaire 48c est prévu à la périphérie du manchon 46a pour servir d'appui à l'épaulement 46a de la pièce formant écrou 46.
Un organe élastique tel'qu'un ressort hélicoïdal 52 est maintenu en position comprimée entre l'embase 48b et l'épaulement 46b et exerce donc sous l'épaulement un effort dirigé vers le haut destiné à amener le clapet 20 en contact avec son siège 12a.
Le manchon cylindrique 46a traverse l'orifice 50 et débouche de l'autre coté de l'embase 48b.
Un élément dit fusible 54 réalisé dans un matériau fondant sous l'action de la chaleur est placé sous l'embase 48b en appui contre celle-ci et exerce sur la pièce formant écrou un effort qui tend à compenser l'effort de compression de l'organe élastique 52.
L'élément fusible 54 en plastique dur a par exemple une forme générale de gobelet coiffant la partie du manchon 46a qui fait saillie par rapport à l'embase de manière à venir en appui sur ladite embase par un rebord et qui comporte plusieurs griffes 54a rentrées vers l'intérieur dudit gobelet de façon à s'engager dans une gorge 46c ménagée sur la surface extérieure du manchon cylindrique 46a, empêchant ainsi ledit manchon de se diriger vers le haut sous l'influence du ressort 52.
Lorsqu'un feu se déclare en amont du compteur, la chaleur régnant dans l'environnement de l'organe de coupure se transmet à l'élément fusible 54 qui se met à fondre. Les griffes 54a perdent de leur rigidité et ne peuvent donc plus compenser l'effort exercé par le ressort 52 qui pousse fortement sur l'épaulement 46b.
Étant donné que la pièce formant écrou 46 , l'axe de clapet 22 et le clapet 20 sont solidaires l'un de l'autre, l'effort de poussée sur l'épaulement se transmet à l'axe de clapet qui monte et amène le clapet en contact avec le siège de clapet 12a, assurant ainsi l'étanchéité.

On notera toutefois que ce système de fermeture rapide de l'organe de coupure en cas de feu à proximité du compteur de gaz est envisageable avec tout dispositif d'entraînement en rotation de l'axe de clapet par le moteur qui autorise au clapet et à son axe un degré de liberté en translation suivant la direction longitudinale de déplacement du clapet.
Comme l'élément fusible est relié au siège de clapet par l'intermédiaire du châssis métallique, la chaleur régnant à proximité de l'ouverture 18 se transmet rapidement à travers le métal du châssis et accélère la fusion dudit élément fusible.

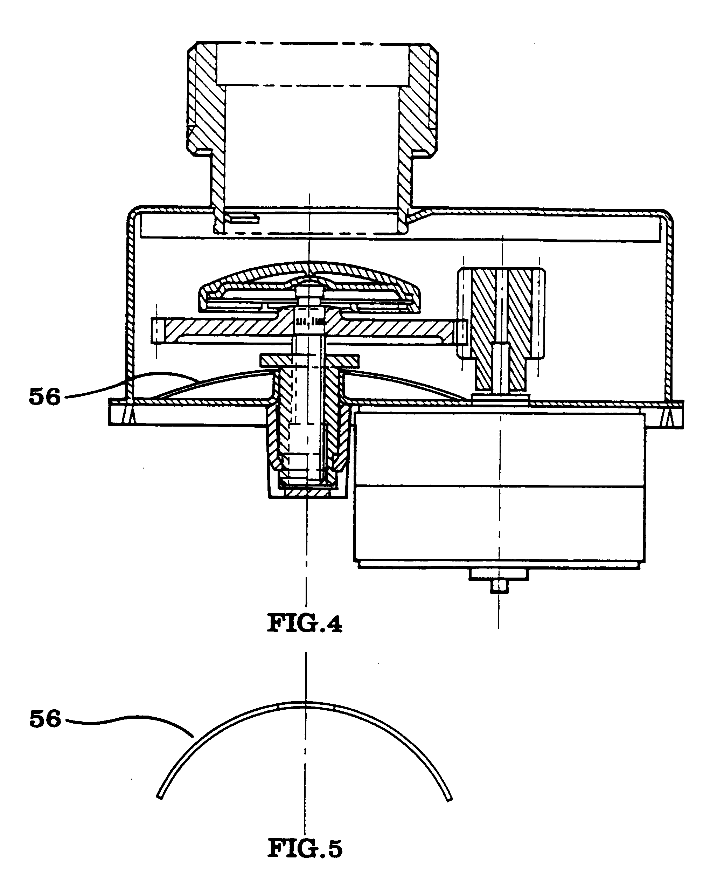

La figure 4 représente une variante de réalisation de l'organe élastique de la figure 3.
Sur cette figure, l'organe élastique est un ressort à lame tel que représenté en coupe sur la figure 5.
Il est bien sur possible d'utiliser d'autres types d'organe élastiques pour remplir cette fonction.

Le dispositif d'entraînement mécanique de l'axe de clapet 22 à partir du moteur ne se limite pas à ce qui vient d'être décrit.
En effet, ce dispositif peut par exemple être constitué d'une courroie lisse ou crantée montée sur l'axe de clapet et sur l'axe sortant du moteur.

Le système anti-feu constitué de l'organe élastique et de l'élément fusible peut aussi s'adapter sur l'organe de coupure représenté à la figure 2.
Il convient de noter que la présence de l'organe élastique et de l'élément fusible n'est pas toujours souhaitée.

## Revendications

1. Organe de coupure (14) d'un flux de gaz pour compteur de gaz (10) comprenant un clapet (20) mobile par rapport à un siège de clapet (12a) dans une direction longitudinale, ledit clapet étant relié à un axe dit de clapet (22) aligné suivant cette direction longitudinale, caractérisé en ce qu'au moins une partie dudit axe de clapet est filetée et coopère avec une pièce (24 ; 46) entourant ladite partie de l'axe et formant écrou, ledit axe de clapet (22) ayant ainsi un mouvement hélicoïdal.

2. Organe selon la revendication 1, dans lequel le clapet (20) est monté libre en rotation sur l'axe de clapet (22).

3. Organe selon la revendication 1 ou 2, comprenant un moteur (26 ; 40) qui entraîne en rotation l'axe de clapet.

4. Organe selon la revendication 3, dans lequel le moteur (26) est placé à une extrémité (22a) de l'axe de clapet (22) qui est opposée à l'extrémité (22b) dudit axe où se trouve le clapet .

5. Organe selon les revendications 3 et 4, dans lequel le moteur (40) transmet le mouvement de rotation à l'axe de clapet (22) par l'intermédiaire d'un dispositif d'entraînement mécanique.

6. Organe selon la revendication 5, dans lequel l'axe de clapet (22) porte une couronne dentée (42) emmanchée sur ledit axe et coopérant avec un pignon (44) entraîné en rotation par le moteur (40) autour d'un second axe parallèle à l'axe de clapet et qui est relié audit moteur.

7. Organe selon la revendication 6, dans lequel le pignon (44) a une dimension dans une direction parallèle à l'axe de clapet (22) qui correspond au déplacement axial du clapet.

8. Organe selon la revendication 6, dans lequel la couronne dentée (42) est disposée entre le clapet (20) et la pièce formant écrou (46).

9. Organe selon l'une des revendications 3 à 8, dans lequel le moteur (26 ; 40) est un moteur pas à pas.

10. Organe selon la revendication 4 ou 6, dans lequel la pièce formant écrou (46) est soumise à l'action d'un organe élastique (52) tendant à rapprocher ladite pièce et donc le clapet (20) du siège de clapet (12a), et est retenue dans sa position au moyen d'un élément dit fusible (54) réalisé dans une matière fondant sous l'action de la chaleur.

11. Organe selon la revendication 10, dans lequel la pièce formant écrou (46) est logée dans un orifice (50) pratiqué dans une embase (48b) et comprend un épaulement (46b), l'organe élastique étant comprimé entre ladite embase et ledit épaulement de manière à exercer sur ladite pièce un effort qui tend à la rapprocher du siège de clapet (12a).

12. Organe selon la revendication 11, dans lequel la pièce formant écrou (46) traverse l'orifice (50) et fait saillie hors de l'embase (48b) du coté opposé où se trouve l'organe élastique (52), l'élément dit fusible (54) étant maintenu en appui contre ladite embase et exerçant sur ladite pièce un effort qui tend à l'éloigner du siège de clapet (12a).

13. Organe selon la revendication 12, dans lequel l'embase (48b) est réalisée dans un matériau conducteur thermique et fait partie d'un châssis (48) réalisé dans le même matériau et qui relie ladite embase au siège de clapet.

14. Compteur de gaz (10) comprenant une unité de mesure et, équipé en amont de celle-ci dans le sens de circulation d'un flux de gaz entrant dans ledit compteur, d'un organe de coupure (14) dudit flux de gaz, ledit organe de coupure comprenant un clapet (20) mobile par rapport à un siège de clapet (12a) dans une direction longitudinale, ledit clapet étant relié à un axe dit de clapet (22) aligné suivant cette direction longitudinale, caractérisé en ce qu'au moins une partie dudit axe de clapet est filetée et coopère avec une pièce (24 ; 46) entourant ladite partie de l'axe et formant écrou, ledit axe de clapet ayant ainsi un mouvement hélicoïdal.

15. Compteur de gaz selon la revendication 14, dans lequel l'organe de coupure (14) est'disposé à l'intérieur dudit compteur (10).

16. Compteur de gaz selon la revendication 14 ou 15, dans lequel l'organe de coupure (14) possède les caractéristiques de l'une quelconque des revendications 2 à 13.

## Claims

1. A gas flow interrupter (14) for a gas meter (10), comprising a valve member (20) movable relative to a valve seat (12a) in a longitudinal direction, said valve member being connected to a "valve" shaft (22) extending along said longitudinal direction, characterized in that at least a portion of said valve shaft is threaded and co-operates with a part (24; 46) surrounding said portion of the shaft and forming a nut, said valve shaft (22) thus imparting helical motion.

2. An interrupter according to claim 1, in which the valve member (20) is mounted free to rotate on the valve shaft (22).

3. An interrupter according to claim 1 or 2, including a motor (26; 40) that rotates the valve shaft.

4. An interrupter according to claim 3, in which the motor (26) is placed at the end (22a) of the valve shaft (22) that is remote from the end (22b) of said shaft at which the valve member is located.

5. An interrupter according to claims 3 and 4, in which the motor (40) transmits rotary motion to the valve shaft (22) via a mechanical drive device.

6. An interrupter according to claim 5, in which the valve shaft (22) carries a driven gear wheel (42) engaged on said shaft and co-operating with a driving gear wheel (44) rotated by the motor (40) about a second shaft parallel to the valve shaft and connected to said motor.

7. An interrupter according to claim 6, in which the driving gear wheel (44) extends in a direction parallel to the valve shaft (22) over a dimension equal to the axial displacement of the valve member.

8. An interrupter according to claim 6, in which the driven gear wheel (42) is disposed between the valve member (20) and the nut-forming part (46).

9. An interrupter according to any one of claims 3 to 8, in which the motor (26; 40) is a stepper motor.

10. An interrupter according to claim 4 or 6, in which the nut-forming part (46) is subjected to drive from a resilient member (52) urging said part and thus the valve member (20) towards the valve seat (12a), and is held in position by means of a "fuse" element (54) made of a material that melts under the action of heat.

11. An interrupter according to claim 10, in which the nut-forming part (46) includes a shoulder (46b) and is received in an orifice (50) formed in a base (48b), the resilient member being compressed between said base and said shoulder so as to exert a force on said part urging it towards the valve seat (12a).

12. An interrupter according to claim 11, in which the nut-forming part (46) passes through the orifice (50) and projects beyond the base (48b) away from its side on which the resilient member (52) is located, the fuse element (54) being held pressed against said base and exerting a force on said part holding it away from the valve seat (12a).

13. An interrupter according to claim 12, in which the base (48b) is made of a material that conducts heat and forms a portion of a frame (48) made of the same material and connecting said base to the valve seat.

14. A gas meter (10) comprising a measurement unit and fitted upstream therefrom in the flow direction of gas entering said meter, with an interrupter (14) for interrupting said gas flow, said interrupter comprising a valve member (20) movable relative to a valve seat (12a) in a longitudinal direction, said valve member being connected to a "valve" shaft (22) extending along said longitudinal direction, the interrupter being characterized in that at least a portion of said valve shaft is threaded and co-operates with a part (24; 46) surrounding said portion of the shaft and forming a nut, said valve shaft (22) thus imparting helical motion.

15. A gas meter according to claim 14, in which the interrupter (14) is disposed inside said meter (10).

16. A gas meter according to claim 14 or 15, in which the interrupter (14) possesses the characteristics of any one of claims 2 to 13.

## Patentansprüche

1. Organ (14) zur Unterbrechung des Gasstroms eines Gaszählers (10) mit einem in bezug auf einen Ventilsitz (12a) in Längsrichtung beweglichen Ventilelement (20), wobei das Ventilelement mit einem Ventilschaft (22) verbunden ist, der entsprechend dieser Längsrichtung ausgerichtet ist, dadurch gekennzeichnet, daß mindestens ein Teil des Ventilschafts (22) ein Außengewinde aufweist und mit einem Teil (24; 46) zusammenwirkt, das diesen Teil des Ventilschafts umgibt und eine Mutter bildet, wobei der Ventilschaft (22) somit eine schraubenförmige Bewegung ausführt.

2. Organ nach Anspruch 1, bei dem das Ventilelement (20) frei drehbar auf dem Ventilschaft (22) angebracht ist.

3. Organ nach Anspruch 1 oder 2, mit einem Motor (26; 40), der die Ventilschaft (22) drehbeweglich in Drehung versetzt.

4. Organ nach Anspruch 3, bei dem der Motor (26) an einem Ende (22a) des Ventilschafts (22) angebracht ist, das gegenüber dem Ende (22b) des Schafts liegt, an welchem sich das Ventilelement befindet.

5. Organ nach den Ansprüchen 3 und 4, bei dem der Motor (40) dem Ventilschaft (22) die Drehbewegung über eine mechanische Antriebsvorrichtung überträgt.

6. Organ nach Anspruch 5, bei dem der Ventilschaft (22) einen Zahnkranz (42) trägt, der auf den Schaft aufgesteckt ist und mit einem vom Motor (40) um eine zweite, in bezug auf den Ventilschaft (22) parallele Achse in Drehung versetzten Ritzel (44) zusammenwirkt, wobei das Ritzel mit dem Motor verbunden ist.

7. Organ nach Anspruch 6, bei dem das Ritzel (44) in einer zum Ventilschaft (22) parallelen Richtung eine der axialen Verstellung des Ventilelements entsprechenden Abmessung aufweist.

8. Organ nach Anspruch 6, bei dem der Zahnkranz (42) zwischen dem Ventilelement (20) und dem die Mutter (46) bildenden Teil angeordnet ist.

9. Organ nach einem der Ansprüche 3 bis 8, bei dem der Motor (26; 40) ein Schrittmotor ist.

10. Organ nach Anspruch 4 oder 6, bei dem das die Mutter (46) bildende Teil der Wirkung eines federnden Organs (52) ausgesetzt ist, das das Teil und somit das Ventilelement (20) näher an den Ventilsitz (12a) zu bringen sucht, und das in seiner Stellung mittels eines schmelzbaren Elements (54) gehalten ist, das aus einem unter Hitzeeinwirkung schmelzenden Material gebildet ist.

11. Organ nach Anspruch 10, bei dem das die Mutter (46) bildende Teil in einer in einer Grundplatte (48b) angebrachten Öffnung (50) gelagert ist und eine Schulter (46b) aufweist, wobei das federnde Organ zwischen der Grundplatte und der Schulter zusammengedrückt ist, um auf das Teil eine Kraft auszuüben, die es näher an den Ventilsitz (12) zu bringen sucht.

12. Organ nach Anspruch 11, bei dem das die Mutter (46) bildende Teil durch die Öffnung (50) hindurchgeht und aus der Grundplatte (48b) auf der Seite herausragt, die der Seite gegenüberliegt, an der sich das federnde Organ befindet, wobei das schmelzbare Element (54) in Anlage an der Grundplatte gehalten ist und auf das Teil eine Kraft ausübt, die es vom Ventilsitz (12a) zu entfernen sucht.

13. Organ nach Anspruch 12, bei dem die Grundplatte (48b) aus einem wärmeleitenden Material besteht und Teil eines Gehäuses (48) ist, das aus dem gleichen Material besteht und die Grundplatte mit dem Ventilsitz verbindet.

14. Gaszähler mit einer Meßeinheit, der mit einem in bezug auf die Meßeinheit in Strömungsrichtung eines in den Zähler fließenden Gasstroms stromaufwärts angeordneten Organ (14) zur Unterbrechung des Gasstroms ausgestattet ist, wobei das Unterbrechungsorgan ein in bezug auf den Ventilsitz (12a) in einer Längsrichtung bewegliches Ventilelement (20) enthält, wobei das Ventilelement mit einem Ventilschaft (22) verbunden ist, der entlang dieser Längsrichtung ausgerichtet ist, dadurch gekennzeichnet, daß mindestens ein Teil des Ventilschafts ein Außengewinde aufweist und mit einem Teil (24; 46) zusammenwirkt, das den Teil des Schafts umgibt und eine Mutter bildet, wobei der Ventilschaft somit eine schraubenförmige Bewegung ausführt.

15. Gaszähler nach Anspruch 14, bei dem das Unterbrechungsorgan (14) innerhalb des Zählers (10) angeordnet ist.

16. Gaszähler nach Anspruch 14 oder 15, bei dem das Unterbrechungsorgan (14) die Merkmale eines der Ansprüche 2 bis 13 aufweist.
